# EUROPEAN PATENT APPLICATION

(11) **EP 4 804 374 A1**
(43) Date of publication of application: **09.09.2026**
(21) Application number: 24887349.9
(22) Date of filing: 22.05.2024
(51) Int. Cl.: H02J 7/00, H01M 10/42, H01M 10/60

(54) **BATTERY EQUALIZATION CONTROL METHOD, APPARATUS, DEVICE, STORAGE MEDIUM AND PROGRAM PRODUCT**

(30) Priority: 10.11.2023 CN 202311499108
(71) Applicant: Contemporary Amperex Technology Co., Limited, Ningde, Fujian 352100 (CN)
(72) Inventor: MA, Hang, Ningde, Fujian 352100 (CN)
(74) Representative: Ziebig Hengelhaupt Intellectual Property Attorneys Patentanwaltskanzlei PartGmbB
(86) International application number: PCT/CN2024/094786
(87) International publication number: WO 2025/097725

(57) **Abstract**

The present application relates to a battery equalization control method, an apparatus, a device, a storage medium and a program product. The method comprises: acquiring the current capacity and the current temperature of each battery branch in a battery system; according to the current capacity and the current temperature of each battery branch, determining a target temperature of each battery branch; and, according to the target temperature of each battery branch, performing thermal management on each battery branch so as to balance branch currents of the multiple battery branches. Using the present application can reduce the problem of ring current and increase the available capacity of battery systems.

## Description

### RELATED APPLICATION

The present application claims priority to Chinese Patent Application No. 202311499108.5, filed on November 10, 2023 and entitled "BATTERY BALANCING CONTROL METHOD, APPARATUS, DEVICE, STORAGE MEDIUM, AND PROGRAM PRODUCT", which is incorporated herein by reference in its entirety.

### TECHNICAL FIELD

The present application relates to the technical field of batteries, and in particular, to a battery balancing control method, an apparatus, a device, a storage medium, and a program product.

### BACKGROUND

With the development of new energy technologies, batteries have become indispensable energy storage devices in people's lives. At present, a plurality of battery branches are often connected in parallel to form a battery system. In practical applications, there may be issues such as current imbalance and circulating currents among the plurality of battery branches, which easily lead to difficulties in fully charging the batteries and an inability to fully utilize the capacity of the battery system.

### SUMMARY

Based on the above problems, the present application provides a battery balancing control method, an apparatus, a device, a storage medium, and a program product, which can reduce the circulating current problem and increase the available capacity of a battery system.

In a first aspect, the present application provides a battery balancing control method. The method includes: acquiring a current capacity and a current temperature of each battery branch in a battery system; determining a target temperature of each battery branch based on the current capacity and the current temperature of each battery branch; and performing thermal management on each battery branch based on the target temperature of each battery branch, so as to balance branch currents of a plurality of the battery branches.

In the technical solutions of the embodiments of the present application, thermal management is performed on each battery branch to adjust the temperature of each battery branch, thereby adjusting the branch resistance of each battery branch and balancing the branch currents of the plurality of battery branches. In this way, the circulating current problem can be alleviated, and the charging speed of the battery can be adjusted by adjusting the branch currents, thereby increasing the available capacity of the battery system.

In some embodiments, determining the target temperature of each battery branch based on the current capacity and the current temperature of each battery branch includes: determining a target resistance relationship among the plurality of battery branches based on the current capacity of each battery branch; determining a first battery branch and a branch resistance of the first battery branch based on the current temperature of each battery branch; and determining a target temperature of each second battery branch among the plurality of battery branches other than the first battery branch based on the target resistance relationship and the branch resistance of the first battery branch. In the technical solutions of the embodiments of the present application, the target resistance relationship is determined based on the current capacity, and then the target temperature of each battery branch may be determined based on the target resistance relationship and the current temperature, thereby providing a basis for subsequent thermal management and enabling more accurate thermal management.

In some embodiments, determining the first battery branch and the branch resistance of the first battery branch based on the current temperature of each battery branch includes: determining a reference temperature based on the current temperature of each battery branch, and determining a battery branch corresponding to the reference temperature as the first battery branch; and searching for the branch resistance of the first battery branch in a pre-established temperature resistance table based on a current temperature of the first battery branch. In the technical solutions of the embodiments of the present application, the branch resistance can be quickly and accurately determined based on the temperature by using the pre-established temperature resistance table, thereby providing a basis for subsequently determining the target temperature based on the resistance and improving the thermal management efficiency.

In some embodiments, determining the target temperature of each second battery branch among the plurality of battery branches other than the first battery branch based on the target resistance relationship and the branch resistance of the first battery branch includes: determining a branch resistance of each second battery branch based on the target resistance relationship and the branch resistance of the first battery branch; and searching for the target temperature of each second battery branch in a temperature resistance table based on the branch resistance of each second battery branch. In the technical solutions of the embodiments of the present application, the target temperature can be quickly and accurately determined based on the branch resistance by using the pre-established temperature resistance table, thereby improving the thermal management efficiency.

In some embodiments, determining the target resistance relationship among the plurality of battery branches based on the current capacity of each battery branch includes: determining a target current relationship among the plurality of battery branches based on the current capacity of each battery branch; and determining the target resistance relationship among the plurality of battery branches based on the target current relationship among the plurality of battery branches. In the technical solutions of the embodiments of the present application, the target resistance relationship is derived based on the capacity, which provides a basis for subsequent resistance adjustment and thermal management on the battery branch, such that the thermal management is more accurate, thereby balancing the branch currents among the battery branches and alleviating the circulating current problem.

In some embodiments, the method further includes: acquiring a temperature change and a capacity change for each battery branch; and when it is determined that at least one of the temperature change and the capacity change meets a correction trigger condition, returning to perform a step of acquiring the current capacity and the current temperature of each battery branch in the battery system. In the technical solutions of the embodiments of the present application, since the thermal management affects the charging speed and the discharging speed of the battery branch, after a preliminary thermal management target is reached, the target temperature may be corrected to start a new round of thermal management, such that the temperature of the battery branch is adjusted more accurately, thereby balancing the branch currents among the battery branches more accurately and reducing the circulating current problem. In addition, the available capacity of the battery system is improved.

In a second aspect, the present application further provides a battery balancing control apparatus. The apparatus includes:
a capacity temperature acquisition module, configured to acquire a current capacity and a current temperature of each battery branch in a battery system;
a temperature determination module, configured to determine a target temperature of each battery branch based on the current capacity and the current temperature of each battery branch; and
a thermal management module, configured to perform thermal management on each battery branch based on the target temperature of each battery branch, so as to balance branch currents of a plurality of the battery branches.

In a third aspect, the present application further provides an electronic device. The electronic device includes a memory and a processor, the memory having a computer program stored therein. The processor, when executing the computer program, implements the method according to the first aspect.

In a fourth aspect, the present application further provides a computer-readable storage medium having a computer program stored thereon. The computer program, when executed by a processor, implements the method according to the first aspect.

In a fifth aspect, the present application further provides a computer program product including a computer program. The computer program, when executed by a processor, implements the method according to the first aspect.

### BRIEF DESCRIPTION OF THE DRAWINGS

By reading the detailed description of the optional implementations below, various additional advantages and benefits will become clear to those of ordinary skill in the art. The drawings are provided solely for the purpose of illustrating the optional implementations and shall not be construed as limiting the present application. Furthermore, the same reference numerals in all the drawings denote identical components. In the drawings:
FIG. 1a is a schematic structural diagram of a thermal management system according to some embodiments of the present application;
FIG. 1b is a schematic structural diagram of a thermal management system according to some embodiments of the present application;
FIG. 1c is a schematic structural diagram of a thermal management system according to some embodiments of the present application;
FIG. 2 is a schematic flowchart of a battery balancing control method according to some embodiments of the present application;
FIG. 3a is a schematic diagram of thermal management according to some embodiments of the present application;
FIG. 3b is a schematic diagram of thermal management according to some embodiments of the present application;
FIG. 4 is a schematic flowchart of a step of determining a target temperature of each battery branch according to some embodiments of the present application;
FIG. 5 is a schematic flowchart of a step of determining a target resistance relationship according to some embodiments of the present application;
FIG. 6 is a schematic flowchart of a step of determining a branch resistance of a first battery branch according to some embodiments of the present application;
FIG. 7 is a schematic flowchart of a step of determining a target temperature of each second battery branch according to some embodiments of the present application;
FIG. 8 is a schematic flowchart of a step of correcting a target temperature according to some embodiments of the present application;
FIG. 9 is a structural block diagram of a battery balancing control apparatus according to some embodiments of the present application;
FIG. 10 is a structural block diagram of a battery balancing control apparatus according to some embodiments of the present application; and
FIG. 11 is an internal structural diagram of an electronic device according to some embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meaning as commonly understood by those skilled in the technical field to which the present application belongs. The terms used herein are only used to illustrate the specific embodiments, rather than limit the present application. The terms "include", "comprise", "have", and "provided with", and any variants thereof in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, "plurality of" means two or more.

Reference in the present application to "embodiment" means that a particular feature, structure, or characteristic described in combination with the embodiment may be included in at least one embodiment of the present application. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present application, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present application, the term "plurality of" refers to two or more (including two). Similarly, "plurality of groups" refers to two or more (including two) groups, and "plurality of pieces" refers to two or more (including two) pieces.

In the description of the embodiments of the present application, unless otherwise clearly specified and defined, the technical terms "mount", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present application may be interpreted according to specific conditions.

With the development of new energy technologies, batteries have become indispensable energy storage devices in people's lives. At present, a plurality of battery branches are often connected in parallel to form a battery system. In practical applications, there may be a temperature difference among the plurality of battery branches. The temperature difference may cause current imbalance among the plurality of battery branches, and the current imbalance may cause a circulating current. In addition, the current imbalance among the plurality of battery branches may also cause different charging speeds of the battery branches. After some battery branches are fully charged, the entire battery system stops charging, and some other battery branches are difficult to fully charge. Since some of the battery branches are not fully charged, the problem that the capacity cannot be fully utilized occurs during discharge of the battery system.

Research on the above problem finds that the battery temperature affects the internal resistance of the battery, and the internal resistance of the battery affects the charging current and the discharging current. Based on the finding, the embodiments of the present application provide a battery balancing control method: acquiring a current capacity and a current temperature of each battery branch in a battery system; determining a target temperature of each battery branch based on the current capacity and the current temperature of each battery branch; and performing thermal management on each battery branch based on the target temperature of each battery branch, so as to balance branch currents of a plurality of the battery branches. In the embodiments of the present application, thermal management is performed on each battery branch to adjust the temperature of each battery branch, thereby adjusting the branch resistance of each battery branch and balancing the branch currents of the plurality of battery branches. In this way, the circulating current problem can be alleviated, and the charging speed of the battery can be adjusted by adjusting the branch currents, thereby increasing the available capacity of the battery system.

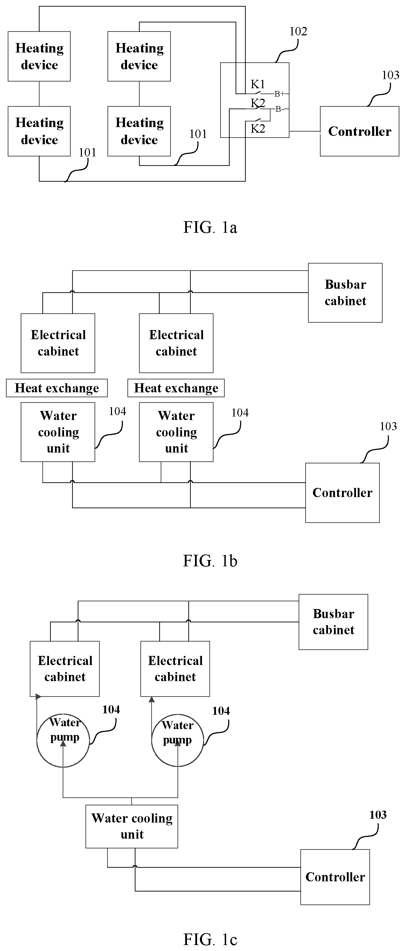

The battery system disclosed in the embodiments of the present application may, but is not limited to, be used in electric devices such as vehicles, ships, or aircraft. Referring to FIG. 1a, a thermal management system 100 for thermal management of a battery system may include a plurality of heating branches 101, a switch circuit 102, and a controller 103. The number of the heating branches 101 may correspond to the number of the battery branches, each heating branch 101 may include a plurality of heating devices, and the number of the heating devices may correspond to the number of the batteries in the battery branches. The heating device may include, but is not limited to, various heating films, heating plates, and the like. The switch branch 102 may include a first switch K1 and a plurality of second switches K2. The first switch K1 is connected to a first end of each heating branch 101, and a second end of each heating branch 101 is correspondingly connected to each second switch K2. The first switch K1 and the second switch K2 may include, but are not limited to, various relay switches. The above controller 101 includes, but is not limited to, various battery management systems (BMS), battery management units (BMU), electronic control units (ECU) of vehicles, and the like. The controller 103 is connected to each switch in the switch circuit 102.

According to some embodiments of the present application, referring to FIGs. 1b and 1c, the thermal management system 100 may further include a plurality of cooling branches 104, and the number of the cooling branches 104 may correspond to the number of the battery branches. Each cooling branch 104 may include, but is not limited to, various water cooling units, cooling water pumps, and the like. The water cooling unit may perform cooling treatment on the electrical cabinet of the battery branch through heat exchange, and the cooling water pump may pump cooling water into the electrical cabinet of the battery branch to perform cooling treatment on the battery branch. The controller 103 is connected to each cooling branch 104.

According to some embodiments of the present application, the thermal management system 100 may further include a plurality of temperature detection devices. The temperature detection devices may perform temperature detection on the battery system, and the controller 103 is connected to each temperature detection device. The above temperature detection device may include, but is not limited to, various temperature sensors.

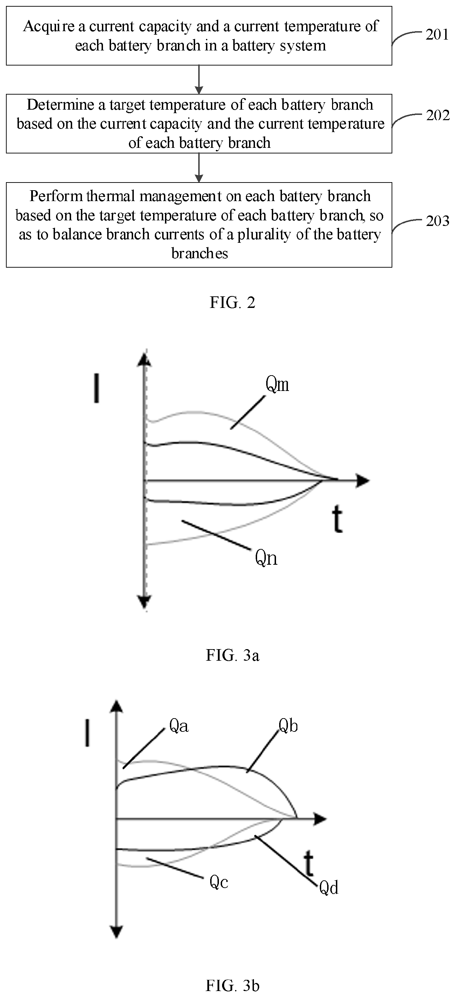

According to some embodiments of the present application, referring to FIG. 2, a battery balancing control method is provided. Taking the application of the method to the controller in FIG. 1 as an example, the method may include the following steps:
In step 201, a current capacity and a current temperature of each battery branch in a battery system are acquired.

The battery capacity is one of the important performance indicators for measuring battery performance, and indicates the amount of electrical energy discharged by a battery under certain conditions (such as discharge rate, temperature, or termination voltage). The current capacity may represent the amount of electrical energy that can be discharged by a battery branch under certain conditions at the current moment.

The controller may acquire the current capacity of each battery branch in various ways. For example, the controller is a battery management system. The battery management system may collect the current capacity of each battery in each battery branch, and then calculate the current capacity of each battery branch. Alternatively, the controller is an ECU of the vehicle, and the ECU is connected to a battery management system of the battery system and acquires the current capacity of each battery branch from the battery management system.

The controller is connected to the temperature detection device of each battery branch, and acquires the temperature of the battery branch at the current moment from each temperature detection device to obtain the current temperature.

In step 202, a target temperature of each battery branch is determined based on the current capacity and the current temperature of each battery branch.

There may be a capacity difference and a temperature difference among the plurality of battery branches. The capacity difference may cause a battery branch with a high capacity to be fully charged first, while a battery branch with a low capacity is difficult to fully charge. During discharge, the battery branch with a low capacity is depleted first, and the capacity of the battery branch with a high capacity is not fully utilized. The temperature difference may cause different branch resistances among the battery branches, thereby resulting in different branch currents among the battery branches. The different branch currents may cause different charging speeds and discharging speeds. In the case that there is both a capacity difference and a temperature difference among the battery branches, the temperature difference may exacerbate the problems that during charge, the battery branch with a low capacity is difficult to fully charge, and during discharge, the capacity of the battery branch with a high capacity is not fully utilized.

Based on the above conditions, the relationship between the capacity and the temperature may be preliminarily determined. During charge, the battery branch with a low capacity requires a high current for charging, and the battery branch with a high capacity requires a low current for charging. Therefore, the branch resistance of the battery branch with a low capacity may be decreased; that is, the temperature of the battery branch with a low capacity is increased; or the branch resistance of the battery branch with a high capacity is increased; that is, the temperature of the battery branch with a high capacity is decreased. During discharge, the battery branch with a low capacity requires a low current for discharging, and the battery branch with a high capacity requires a high current for discharging. Therefore, the branch resistance of the battery branch with a low capacity may be increased; that is, the temperature of the battery branch with a low capacity is decreased; or the branch resistance of the battery branch with a high capacity is decreased; that is, the temperature of the battery branch with a high capacity is increased.

Based on the above relationship and the capacity difference, a candidate temperature of each battery branch may be preliminarily determined, and then based on the temperature difference among the battery branches and the candidate temperature, the target temperature of each battery branch may be further determined.

For example, the capacity of the battery branch 1 is Q1, and the temperature is T1; the capacity of the battery branch 2 is Q2, and the temperature is T2, where the capacity Q1 is greater than the capacity Q2, and the temperature T1 is greater than the temperature T2. During charge, based on the capacity difference ΔQ between the capacity Q1 and the capacity Q2, it is determined that the temperature T2 of the battery branch 2 needs to be increased to the candidate temperature Tx, and then based on the temperature difference ΔT between the temperature T1 and the temperature T2 and the candidate temperature Tx, it can be finally determined that the temperature of the battery branch 2 needs to be increased to the target temperature Ty.

It should be noted that determining the target temperature of each battery branch based on the capacity difference and the temperature difference is not limited to the above method. A correspondence relationship between the capacity and the temperature change may be pre-calibrated, and then the target temperature of each battery branch is determined based on the correspondence relationship, the capacity difference, and the temperature difference.

In step 203, thermal management is performed on each battery branch based on the target temperature of each battery branch, so as to balance branch currents of a plurality of the battery branches.

The thermal management includes performing heating treatment and cooling treatment on the battery branch. Taking the thermal management system shown in FIG. 1a as an example, for any battery branch, if heating treatment is required, the controller first determines the heating branch corresponding to the battery branch and the second switch K2 corresponding to the heating branch. Then, the controller controls the first switch K1 and the second switch K2 to be closed, such that the heating device in the heating branch heats the battery branch. If cooling treatment is required, the controller first determines the cooling branch corresponding to the battery branch, and then controls the cooling branch to perform cooling treatment on the battery branch.

After determining the target temperature of each battery branch, if the target temperature is higher than the current temperature, heating treatment is performed on the battery branch; if the target temperature is lower than the current temperature, cooling treatment is performed on the battery branch.

The above heating treatment can decrease the branch resistance of the battery branch, thereby increasing the branch current of the battery branch. The above cooling treatment can increase the branch resistance of the battery branch, thereby decreasing the branch current of the battery branch. It can be understood that the branch resistance of the battery branch can be adjusted by adjusting the temperature of the battery branch, thereby achieving the effect of balancing the branch currents of the battery branches.

Referring to FIGs. 3a and 3b, the x-axis represents time, the y-axis represents current, the positive direction of the y-axis represents charging, the negative direction of the y-axis represents discharging, the light gray line corresponds to the battery branch 1, and the black line corresponds to the battery branch 2. FIG. 3a shows a case where thermal management is not performed. Taking charging as an example, the branch current of the battery branch 1 is greater than the branch current of the battery branch 2. Therefore, within the same charging time, the battery branch 1 charges an additional capacity Qm compared to the battery branch 2. Taking discharging as an example, the branch current of the battery branch 1 is greater than the branch current of the battery branch 2. Therefore, within the same discharging time, the battery branch 1 discharges an additional capacity Qn compared to the battery branch 2. FIG. 3b shows a case where thermal management is performed. Taking charging as an example, initially, the branch current of the battery branch 1 is greater than the branch current of the battery branch 2. Therefore, the battery branch 1 charges an additional capacity Qa compared to the battery branch 2. After the thermal management is started, the branch current of the battery branch 2 is greater than the branch current of the battery branch 1, and the battery branch 2 charges an additional capacity Qb compared to the battery branch 1. In the case that Qa = Qb, the charge capacities of the battery branch 1 and the battery branch 2 within the same time period can be made the same. Taking discharging as an example, initially, the branch current of the battery branch 1 is greater than the branch current of the battery branch 2. Therefore, the battery branch 1 discharges an additional capacity Qc compared to the battery branch 2. After the thermal management is started, the branch current of the battery branch 2 is greater than the branch current of the battery branch 1, and the battery branch 2 discharges an additional capacity Qd compared to the battery branch 1. In the case that Qc = Qd, the discharge capacities of the battery branch 1 and the battery branch 2 within the same time period can be made the same. As can be seen from FIGs. 3a and 3b, the thermal management can balance the branch currents of the battery branches, and change the charging speed and the discharging speed of the battery branches, thereby improving the available capacity of the battery system.

In the above embodiments, the current capacity and the current temperature of each battery branch in the battery system are acquired; the target temperature of each battery branch is determined based on the current capacity and the current temperature of each battery branch; and the thermal management is performed on each battery branch based on the target temperature of each battery branch, so as to balance the branch currents of the plurality of battery branches. In the technical solutions of the embodiments of the present application, thermal management is performed on each battery branch to adjust the temperature of each battery branch, thereby adjusting the branch resistance of each battery branch and balancing the branch currents of the plurality of battery branches. In this way, the circulating current problem can be alleviated, and the charging speed of the battery can be adjusted by adjusting the branch currents, thereby increasing the available capacity of the battery system.

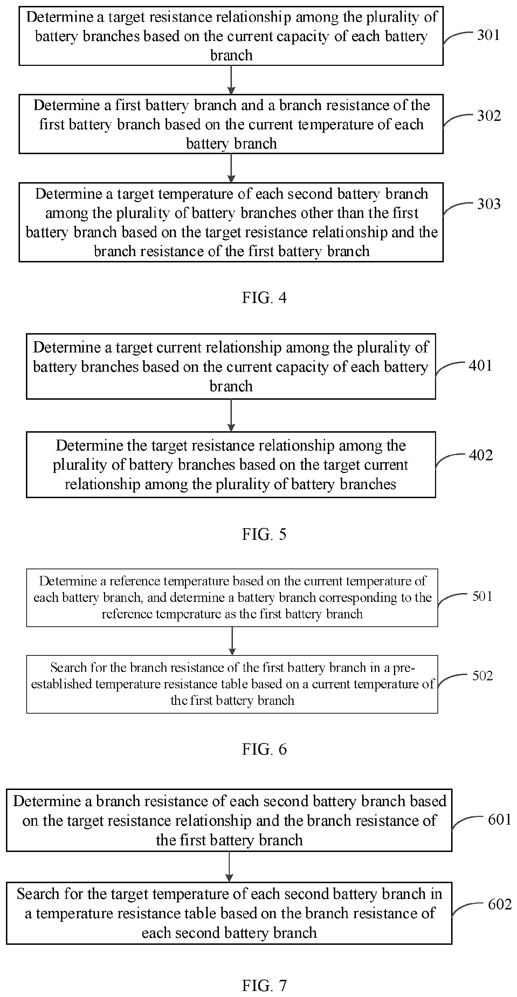

According to some embodiments of the present application, referring to FIG. 4, the above process of determining the target temperature of each battery branch based on the current capacity and the current temperature of each battery branch may include the following steps:
In step 301, a target resistance relationship among the plurality of battery branches is determined based on the current capacity of each battery branch.

The target resistance relationship is a resistance relationship among the plurality of battery branches when each battery branch reaches a target capacity. Optionally, when each battery branch reaches the target capacity, the capacity difference among the plurality of battery branches is within a preset range.

A mapping relationship between the capacity relationship and the target resistance relationship of the plurality of battery branches is determined based on the system structure of the battery system. After the current capacity of each battery branch is determined, the capacity relationship among the plurality of battery branches may be determined, and then the target resistance relationship among the plurality of battery branches may be determined based on the above mapping relationship and the capacity relationship.

For example, the capacity relationship among the plurality of battery branches is Q1:Q2:Q3, and it may be determined that the target resistance relationship among the plurality of battery branches is R1:R2:R3 based on the mapping relationship.

In step 302, a first battery branch and a branch resistance of the first battery branch are determined based on the current temperature of each battery branch.

The branch resistance is a total equivalent resistance determined based on a battery connection relationship in the battery branch. Optionally, in the case that the plurality of batteries in the battery branch are connected in series, the branch resistance is the sum of the internal resistances of the plurality of batteries in the battery branch.

A correspondence relationship between temperature and branch resistance is pre-established. After the current temperature of each battery branch is determined, the first battery branch is selected from the plurality of battery branches based on the current temperatures of the plurality of battery branches. Then, the branch resistance of the first battery branch corresponding to the current temperature of the first battery branch may be determined based on the above correspondence relationship.

In step 303, a target temperature of each second battery branch among the plurality of battery branches other than the first battery branch is determined based on the target resistance relationship and the branch resistance of the first battery branch.

The branch resistance of each second battery branch other than the first battery branch may be determined based on the above target resistance relationship and the resistance of the first battery branch. Then, the target temperature of each second battery branch corresponding to the branch resistance of each second battery branch may be determined based on the above correspondence relationship between temperature and branch resistance.

In the above embodiments, the target resistance relationship among the plurality of battery branches is determined based on the current capacity of each battery branch; the first battery branch and the branch resistance of the first battery branch are determined based on the current temperature of each battery branch; and the target temperature of each second battery branch among the plurality of battery branches other than the first battery branch is determined based on the target resistance relationship and the branch resistance of the first battery branch. In the technical solutions of the embodiments of the present application, the target resistance relationship is determined based on the current capacity, and then the target temperature of each battery branch may be determined based on the target resistance relationship and the current temperature, thereby providing a basis for subsequent thermal management and enabling more accurate thermal management.

According to some embodiments of the present application, referring to FIG. 5, the above process of determining the target resistance relationship among the plurality of battery branches based on the current capacity of each battery branch may include the following steps:
In step 401, a target current relationship among the plurality of battery branches is determined based on the current capacity of each battery branch.

The target current relationship is a current relationship among the plurality of battery branches when each battery branch reaches a target capacity. Optionally, when each battery branch reaches the target capacity, the capacity difference among the plurality of battery branches is within a preset range.

After the current capacity of each battery branch is determined, the target capacity relationship when each battery branch reaches the target capacity may be determined. The battery capacity is the integral of the current I within the time period from t0 to t1; that is, there is a direct proportional relationship between the battery capacity and the current. Therefore, the target current relationship among the plurality of battery branches may be determined based on the above target capacity relationship.

For example, the target capacity relationship among the plurality of battery branches is Q1':Q2':Q3'. Since the capacity Q is directly proportional to the current I, the target current relationship among the plurality of battery branches is I1:I2:I3.

In step 402, the target resistance relationship among the plurality of battery branches is determined based on the target current relationship among the plurality of battery branches.

Based on the relationship among the plurality of battery branches connected in parallel in the battery system, it may be determined that the branch voltages of the plurality of battery branches are the same. Based on U = I * R, it may be determined that the current of each battery branch is inversely proportional to the resistance. After the target current relationship among the plurality of battery branches is determined, the target resistance relationship among the plurality of battery branches may be determined based on the inverse proportional relationship between the current and the resistance.

For example, the target current relationship among the plurality of battery branches is I1:I2:I3, and the target resistance relationship among the plurality of battery branches may be determined as R1:R2:R3.

In the above embodiments, the target current relationship among the plurality of battery branches is determined based on the current capacity of each battery branch; and the target resistance relationship among the plurality of battery branches is determined based on the target current relationship among the plurality of battery branches. In the technical solutions of the embodiments of the present application, the target resistance relationship is derived based on the capacity, which provides a basis for subsequent resistance adjustment and thermal management on the battery branch, such that the thermal management is more accurate, thereby balancing the branch currents among the battery branches and alleviating the circulating current problem.

According to some embodiments of the present application, referring to FIG. 6, the above process of determining the first battery branch and the branch resistance of the first battery branch based on the current temperature of each battery branch may include the following steps:
In step 501, a reference temperature is determined based on the current temperature of each battery branch, and a battery branch corresponding to the reference temperature is determined as the first battery branch.

In practical applications, thermal management of the battery branch needs to be performed within the allowable temperature range of the battery. Therefore, after the current temperature of each battery branch is determined, the reference temperature is determined based on the allowable temperature range of the battery and the current temperature of each battery branch.

For example, based on the allowable temperature range of the battery and the current temperature of each battery branch, the highest current temperature may be determined as the reference temperature, the lowest current temperature may be determined as the reference temperature, or the average temperature of a plurality of current temperatures may be determined as the reference temperature. It should be noted that the manner of determining the reference temperature is not limited to the above description, and another manner may be used.

After the reference temperature is determined, a battery branch corresponding to the reference temperature is determined as the first battery branch. For example, if the highest current temperature is determined as the reference temperature, the battery branch corresponding to the highest current temperature is determined as the first battery branch; if the lowest current temperature is determined as the reference temperature, the battery branch corresponding to the lowest current temperature is determined as the first battery branch; and if the average temperature is determined as the reference temperature, the battery branch with the current temperature closest to the average temperature is determined as the first battery branch.

In step 502, the branch resistance of the first battery branch is searched for in a pre-established temperature resistance table based on a current temperature of the first battery branch.

The temperature resistance table is pre-established, and the temperature resistance table includes a correspondence relationship between temperature and resistance. After the current temperature of the first battery branch is determined, the current temperature is searched for in the temperature resistance table, and the resistance corresponding to the found current temperature is determined as the branch resistance of the first battery branch.

For example, the first battery branch is the battery branch 1, and the current temperature of the battery branch 1 is T1. The temperature T1 is searched for in the temperature battery table, and then the resistance R1 corresponding to the temperature T1 is determined as the branch resistance of the first battery branch.

In the above embodiments, the reference temperature is determined based on the current temperature of each battery branch, the battery branch corresponding to the reference temperature is determined as the first battery branch, and the branch resistance of the first battery branch is searched for in the pre-established temperature resistance table based on the current temperature of the first battery branch. In the technical solutions of the embodiments of the present application, the branch resistance can be quickly and accurately determined based on the temperature by using the pre-established temperature resistance table, thereby providing a basis for subsequently determining the target temperature based on the resistance and improving the thermal management efficiency.

According to some embodiments of the present application, referring to FIG. 7, the above process of determining the target temperature of each second battery branch among the plurality of battery branches other than the first battery branch based on the target resistance relationship and the branch resistance of the first battery branch may include the following steps:
In step 601, a branch resistance of each second battery branch is determined based on the target resistance relationship and the branch resistance of the first battery branch.

After the branch resistance of the first battery branch, the branch resistance of each second battery branch may be calculated based on the target resistance relationship and the branch resistance of the first battery branch.

For example, if the first battery branch is the battery branch 1, and the branch resistance of the battery branch 1 is R1, the branch resistance R2 of the battery branch 2 and the branch resistance R3 of the battery branch 3 may be calculated based on the target resistance relationship R1:R2:R3.

In step 602, the target temperature of each second battery branch is searched for in a temperature resistance table based on the branch resistance of each second battery branch.

The temperature resistance table is pre-established, and the temperature resistance table includes a correspondence relationship between temperature and resistance. For each second battery branch, after the branch resistance of the second battery branch is determined, the branch resistance is first searched for in the temperature resistance table, and then the temperature corresponding to the branch resistance is determined as the target temperature of the second battery branch.

For example, the second battery branch includes a battery branch 2 and a battery branch 3, where the branch resistance of the battery branch 2 is R2. The branch resistance R2 is searched for in the temperature resistance table, and the temperature T2' corresponding to the branch resistance R2 is determined as the target temperature of the battery branch 2. The branch resistance of the battery branch 3 is R3, the branch resistance R3 is searched for in the temperature resistance table, and the temperature T3' corresponding to the branch resistance R3 is determined as the target temperature of the battery branch 3.

In the above embodiments, the branch resistance of each second battery branch is determined based on the target resistance relationship and the branch resistance of the first battery branch; and the target temperature of each second battery branch is searched for in the temperature resistance table based on the branch resistance of each second battery branch. In the technical solutions of the embodiments of the present application, the target temperature can be quickly and accurately determined based on the branch resistance by using the pre-established temperature resistance table, thereby improving the thermal management efficiency.

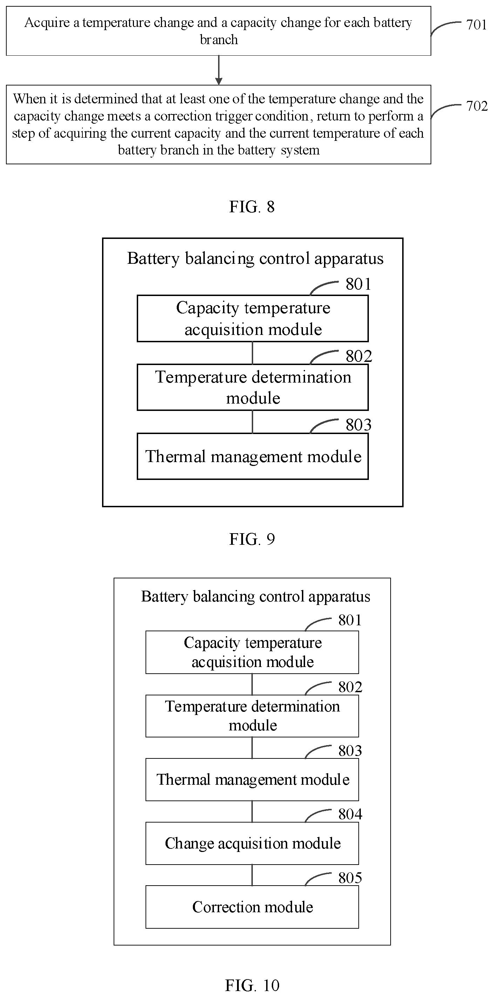

Based on the above embodiments, referring to FIG. 8, the embodiments of the present application further include the following steps:
In step 701, a temperature change and a capacity change are acquired for each battery branch.

In the process of performing thermal management on each battery branch, the controller may acquire the temperature of each battery branch in real time from the temperature detection device, and then calculate the temperature change based on the temperature of the battery branch at the start of the thermal management and the temperature acquired in real time.

Meanwhile, during the charging or discharging process of the battery branches, the controller may further acquire the capacity of each battery branch in real time, and then calculate the capacity change based on the capacity of the battery branch at the start of thermal management and the capacity acquired in real time.

In step 702, when it is determined that at least one of the temperature change and the capacity change meets a correction trigger condition, the process returns to the step of acquiring the current capacity and the current temperature of each battery branch in the battery system.

If it is determined that the temperature change meets the correction trigger condition, and/or the capacity change meets the correction trigger condition, it indicates that the thermal management during the charging or discharging process has reached the preliminary set target, and then the process returns to the step of acquiring the current capacity and the current temperature of each battery branch to re-determine the target temperature of each battery branch; that is, the target temperature of each battery branch is corrected, and thermal management is performed again based on the corrected target temperature.

In some embodiments, the process may include: determining that the temperature change meets the correction trigger condition if the temperature change is greater than or equal to a first change.

The first change is determined based on the temperature at the start of the thermal management and the target temperature. If the temperature change is greater than or equal to the first change, it indicates that the temperature of the battery branch has reached the target temperature from the start of the thermal management, and it is determined that the temperature change meets the correction trigger condition.

For example, if the temperature at the start of the thermal management is Ta and the target temperature is Tb, then the first change is determined as m = Tb - Ta.

In some embodiments, the process may include: determining that the capacity change meets the correction trigger condition if the capacity change is greater than or equal to a second change.

The second change is determined based on the capacity at the start of the thermal management and the target capacity that needs to be reached through the thermal management. If the capacity change is greater than or equal to the second change, it indicates that the capacity of the battery branch has reached the target capacity from the start of the thermal management, and it is determined that the capacity change meets the correction trigger condition.

For example, if the capacity of the battery branch 1 is Qa and the target capacity is Qb, then the second change is determined as n = Qb - Qa.

In the above embodiments, the temperature change and the capacity change are acquired for each battery branch; and when it is determined that at least one of the temperature change and the capacity change meets the correction trigger condition, the process returns to the step of acquiring the current capacity and the current temperature of each battery branch in the battery system. In the technical solutions of the embodiments of the present application, since the thermal management affects the charging speed and the discharging speed of the battery branch, after a preliminary thermal management target is reached, the target temperature may be corrected to start a new round of thermal management, such that the temperature of the battery branch is adjusted more accurately, thereby balancing the branch currents among the battery branches more accurately and reducing the circulating current problem. In addition, the available capacity of the battery system is improved.

According to some embodiments of the present application, the process may further include: stopping performing thermal management on each battery branch when it is determined that charging is ended or discharging is ended.

Since the battery temperature affects the charging speed and the discharging speed of the battery, thermal management is usually performed on the battery branch during the charging process and the discharging process. By adjusting the temperature of the battery branch, the branch resistance of the battery branch is adjusted, thereby balancing the branch currents of the battery branches. After it is determined that charging is ended or discharging is ended, the thermal management on the battery branch may be stopped; that is, the temperature of the battery branch is no longer adjusted.

To stop performing thermal management on the battery branch, the controller may control the first switch and each second switch in the switch circuit to be turned off, and may also control each water cooling unit and the cooling water pump to stop operating.

In the above embodiments, the thermal management on each battery branch is stopped when it is determined that charging is ended or discharging is ended. In the technical solutions of the embodiments of the present application, stopping the thermal management can reduce the energy consumption of the thermal management system, thereby reducing the energy consumption of the electric device.

According to some embodiments of the present application, a battery balancing control method is provided. Taking the application of the method to the controller in FIG. 1 as an example, the method may include the following steps:
In step 1, a current capacity and a current temperature of each battery branch in a battery system are acquired.
In step 2, a target current relationship among the plurality of battery branches is determined based on the current capacity of each battery branch.
In step 3, the target resistance relationship among the plurality of battery branches is determined based on the target current relationship among the plurality of battery branches.
In step 4, a reference temperature is determined based on the current temperature of each battery branch, and a battery branch corresponding to the reference temperature is determined as the first battery branch.
In step 5, the branch resistance of the first battery branch is searched for in a pre-established temperature resistance table based on a current temperature of the first battery branch.
In step 6, a branch resistance of each second battery branch is determined based on the target resistance relationship and the branch resistance of the first battery branch.
In step 7, the target temperature of each second battery branch is searched for in a temperature resistance table based on the branch resistance of each second battery branch.
In step 8, thermal management is performed on each battery branch based on the target temperature of each battery branch, so as to balance branch currents of a plurality of the battery branches.
In step 9, a temperature change and a capacity change are acquired for each battery branch.
In step 10, when it is determined that at least one of the temperature change and the capacity change meets a correction trigger condition, the process returns to step 1.
In step 11, the thermal management on each battery branch is stopped when it is determined that charging is ended or discharging is ended.

In the above embodiments, thermal management is performed on each battery branch to adjust the temperature of each battery branch, thereby adjusting the branch resistance of each battery branch and balancing the branch currents of the plurality of battery branches. In this way, the circulating current problem can be reduced, and the charging speed of the battery can be adjusted by adjusting the branch currents, thereby increasing the available capacity of the battery system.

It should be understood that although the steps in the above flowcharts are displayed sequentially according to the direction of the arrows, these steps are not necessarily executed in the order indicated by the arrows. Unless explicitly stated herein, there is no strict sequential limitation to the execution of these steps, and they can be executed in other orders. Moreover, at least some of the steps in the above flowcharts may include multiple steps or stages, which are not necessarily executed at the same time but can be executed at different times. The execution order of these steps or stages is not necessarily sequential; they can be executed in turn or alternately with other steps or at least part of the steps or stages in other steps.

Based on the same inventive concept, the embodiments of the present application further provide an over-battery balancing control apparatus configured to implement the above-mentioned over-battery balancing control method. The implementation solution provided by the apparatus for problem-solving is similar to the one described in the above-mentioned method. Therefore, for the specific limitations in one or more embodiments of the over-battery balancing control apparatus provided below, reference can be made to the limitations described above for the over-battery balancing control method, which will not be repeated here.

According to some embodiments of the present application, referring to FIG. 9, a battery balancing control apparatus is provided. The apparatus includes:
a capacity temperature acquisition module 801, configured to acquire a current capacity and a current temperature of each battery branch in a battery system;
a temperature determination module 802, configured to determine a target temperature of each battery branch based on the current capacity and the current temperature of each battery branch; and
a thermal management module 803, configured to perform thermal management on each battery branch based on the target temperature of each battery branch, so as to balance branch currents of a plurality of the battery branches.

In some embodiments, the temperature determination module 802 is specifically configured to: determine a target resistance relationship among the plurality of battery branches based on the current capacity of each battery branch; determine a first battery branch and a branch resistance of the first battery branch based on the current temperature of each battery branch; and determine a target temperature of each second battery branch among the plurality of battery branches other than the first battery branch based on the target resistance relationship and the branch resistance of the first battery branch.

In some embodiments, the temperature determination module 802 is specifically configured to: determine a reference temperature based on the current temperature of each battery branch, and determine a battery branch corresponding to the reference temperature as the first battery branch; and search for the branch resistance of the first battery branch in a pre-established temperature resistance table based on a current temperature of the first battery branch.

In some embodiments, the temperature determination module 802 is specifically configured to: determine a branch resistance of each second battery branch based on the target resistance relationship and the branch resistance of the first battery branch; and search for the target temperature of each second battery branch in a temperature resistance table based on the branch resistance of each second battery branch.

In some embodiments, the temperature determination module 802 is specifically configured to: determine a target current relationship among the plurality of battery branches based on the current capacity of each battery branch; and determine the target resistance relationship among the plurality of battery branches based on the target current relationship among the plurality of battery branches.

In some embodiments, referring to FIG. 10, the apparatus further includes:
a change acquisition module 804, configured to acquire a temperature change and a capacity change for each battery branch; and
a correction module 805, configured to return to perform the step of acquiring the current capacity and the current temperature of each battery branch in the battery system when it is determined that at least one of the temperature change and the capacity change meets a correction trigger condition.

In some embodiments, the correction module 805 is specifically configured to determine that the temperature change meets the correction trigger condition if the temperature change is greater than or equal to a first change.

In some embodiments, the correction module 805 is specifically configured to determine that the capacity change meets the correction trigger condition if the capacity change is greater than or equal to a second change.

In some embodiments, the thermal management module 803 is further configured to stop performing thermal management on each battery branch when it is determined that charging is ended or discharging is ended.

The modules in the above over-battery balancing control apparatus may be entirely or partially implemented by software, hardware, and a combination thereof. The above modules may be embedded as hardware into or independent of a processor in the electronic device or may also be stored as software in a memory in the electronic device to enable the processor to call and execute operations corresponding to the modules.

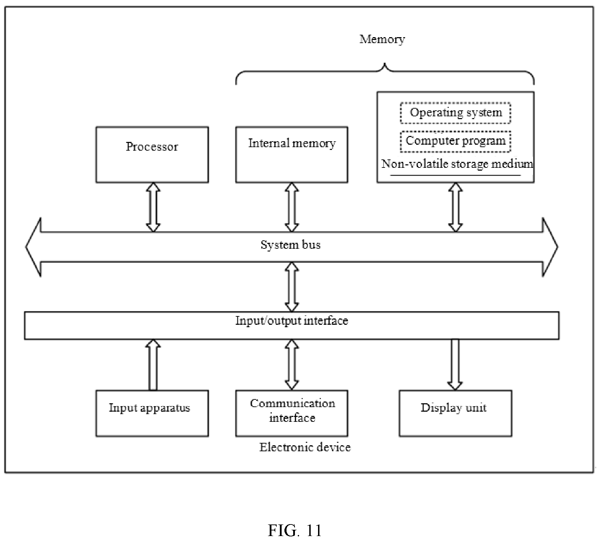

According to some embodiments of the present application, an electronic device is provided. The electronic device may be a terminal, and an internal structural diagram thereof may be as shown in FIG. 11. The electronic device includes a processor, a memory, an input/output interface, a communication interface, a display unit, and an input apparatus. The processor, the memory, and the input/output interface are connected via a system bus. The communication interface, the display unit, and the input apparatus are connected to the system bus via the input/output interface. The processor of the electronic device is configured to provide computing and control capabilities. The memory of the electronic device includes a non-volatile storage medium and an internal memory. The non-volatile storage medium stores an operating system and a computer program. The internal memory provides an environment for the operation of the operating system and the computer program in the non-volatile storage medium. The input/output interface of the electronic device is configured to exchange information between the processor and an external device. The communication interface of the electronic device is configured to communicate with an external terminal in a wired or wireless manner. The wireless manner may be implemented via Wi-Fi, a mobile cellular network, near field communication (NFC), or another technology. The computer program, when executed by the processor, implements a configuration file generation method. The display unit of the electronic device is configured to form visually perceptible images, and may be a display screen, a projection apparatus, or a virtual reality imaging apparatus. The display screen may be a liquid crystal display screen or an electronic ink display screen. The input apparatus of the electronic device may be a touch layer covering the display screen, or may be a button, a trackball, or a touchpad arranged on the housing of the electronic device, or may be an external keyboard, a touchpad, a mouse, or the like.

It can be understood by those skilled in the art that the structure shown in FIG. 11 is a block diagram of only part of the structure associated with the embodiments of the present application and is not intended to limit the electronic devices to which the embodiments of the present application are applied, and that a specific electronic device may include more or less components than those shown, or may have certain components combined, or may have a different arrangement of components.

According to some embodiments of the present application, a non-transitory computer-readable storage medium including instructions is further provided, such as a memory including instructions. The above instructions may be executed by the processor of the electronic device to complete the above method. For example, the non-transitory computer-readable storage medium may be a ROM, a random access memory (RAM), a CD-ROM, a magnetic tape, a floppy disk, an optical data storage device, or the like.

According to some embodiments of the present application, a computer program product is further provided. The computer program, when executed by the processor, may implement the above method. The computer program product includes one or more computer instructions. When these computer instructions are loaded and executed on a computer, part or all of the above method may be implemented based on all or part of the processes or functions described in the embodiments of the present application.

It can be understood by those of ordinary skill in the art that all or part of the processes in the methods of the above embodiments may be implemented by executing a computer program to instruct the relevant hardware. The computer program may be stored in a non-volatile computer-readable storage medium. The computer program, when executed, may include the processes in the methods of the above embodiments. Any reference to a memory, a database, or other media used in the embodiments according to the present application can include at least one of a non-volatile memory and a volatile memory. The non-volatile memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external highspeed cache memory, and the like. By way of illustration and not limitation, RAM may be in various forms, such as a static random access memory (SRAM) or a dynamic random access memory (DRAM). The database involved in the embodiments according to the present application may include at least one of a relational database and a non-relational database. The non-relational database may include, but is not limited to, a blockchain-based distributed database. The processor involved in the embodiments according to the present application may be a general-purpose processor, a central processing unit, a graphics processing unit, a digital signal processor, a programmable logic unit, a data processing logic unit based on quantum computation, etc., but is not limited thereto.

The technical features of the embodiments described above may be combined in any manner. For brevity, not all possible combinations of the technical features in the above embodiments are described. However, as long as no contradiction exists in the combinations of the technical features, such combinations should be considered to be within the scope of the specification.

The embodiments described above only represent several implementations of the present application to facilitate a specific and detailed understanding of the technical solutions of the present application, but they should not be construed as limiting the scope of patent protection of the present disclosure. It should be noted that various changes and modifications can be made by those of ordinary skill in the art without departing from the concept of the present application, and these changes and modifications shall all fall within the protection scope of the present application. It should be understood that technical solutions obtained by those skilled in the art through logical analysis, inference, or limited tests based on the technical solutions provided in the present application shall fall within the protection scope of the appended claims of the present application. Therefore, the protection scope of the patent in the present application shall be subject to the content of the appended claims, and the specification and drawings can be used to explain the content of the claims.

## Claims

1. A battery balancing control method, wherein the method comprises:
acquiring a current capacity and a current temperature of each battery branch in a battery system;
determining a target temperature of each battery branch based on the current capacity and the current temperature of each battery branch; and
performing thermal management on each battery branch based on the target temperature of each battery branch, so as to balance branch currents of a plurality of the battery branches.

2. The method according to claim 1, wherein determining the target temperature of each battery branch based on the current capacity and the current temperature of each battery branch comprises:
determining a target resistance relationship among the plurality of battery branches based on the current capacity of each battery branch;
determining a first battery branch and a branch resistance of the first battery branch based on the current temperature of each battery branch; and
determining a target temperature of each second battery branch among the plurality of battery branches other than the first battery branch based on the target resistance relationship and the branch resistance of the first battery branch.

3. The method according to claim 2, wherein determining the first battery branch and the branch resistance of the first battery branch based on the current temperature of each battery branch comprises:
determining a reference temperature based on the current temperature of each battery branch, and determining a battery branch corresponding to the reference temperature as the first battery branch; and
searching for the branch resistance of the first battery branch in a pre-established temperature resistance table based on a current temperature of the first battery branch.

4. The method according to claim 2 or 3, wherein determining the target temperature of each second battery branch among the plurality of battery branches other than the first battery branch based on the target resistance relationship and the branch resistance of the first battery branch comprises:
determining a branch resistance of each second battery branch based on the target resistance relationship and the branch resistance of the first battery branch; and
searching for the target temperature of each second battery branch in a temperature resistance table based on the branch resistance of each second battery branch.

5. The method according to claim 2, wherein determining the target resistance relationship among the plurality of battery branches based on the current capacity of each battery branch comprises:
determining a target current relationship among the plurality of battery branches based on the current capacity of each battery branch; and
determining the target resistance relationship among the plurality of battery branches based on the target current relationship among the plurality of battery branches.

6. The method according to any one of claims 1 to 5, wherein the method further comprises:
acquiring a temperature change and a capacity change for each battery branch; and
when it is determined that at least one of the temperature change and the capacity change meets a correction trigger condition, returning to perform a step of acquiring the current capacity and the current temperature of each battery branch in the battery system.

7. A battery balancing control apparatus, wherein the apparatus comprises:
a capacity temperature acquisition module, configured to acquire a current capacity and a current temperature of each battery branch in a battery system;
a temperature determination module, configured to determine a target temperature of each battery branch based on the current capacity and the current temperature of each battery branch; and
a thermal management module, configured to perform thermal management on each battery branch based on the target temperature of each battery branch, so as to balance branch currents of a plurality of the battery branches.

8. An electronic device comprising a memory and a processor, the memory having a computer program stored therein, wherein the processor, when executing the computer program, implements the method according to any one of claims 1 to 6.

9. A computer-readable storage medium having a computer program stored thereon, wherein the computer program, when executed by a processor, implements the method according to any one of claims 1 to 6.

10. A computer program product comprising a computer program, wherein the computer program, when executed by a processor, implements the method according to any one of claims 1 to 6.
